# EUROPÄISCHE PATENTSCHRIFT

(11) **EP 0 518 091 B1**
(45) Veröffentlichungstag und Bekanntmachung des Hinweises auf die Patenterteilung: **05.10.1994**
(21) Anmeldenummer: 92108554.4
(22) Anmeldetag: 21.05.1992
(51) Int. Cl.: B62D 1/18, F16D 3/06, F16C 3/035

(54) **Teleskopische Lenkwelle für Kraftfahrzeuge**
Telescopic steering axle for an automotive vehicle
Arbre de direction télescopique pour véhicule automobile

(30) Priorität: 13.06.1991 DE 4119451
(43) Veröffentlichungstag der Anmeldung: 16.12.1992
(73) Patentinhaber: LEMFOERDER METALLWAREN AG., D-49441 Lemförde (DE)
(72) Erfinder: Ersoy, Metin, Dr.-Ing., W-6229 Walluf 2 (DE); Reddehase, Günter, W-2844 Brockum (DE)
(74) Vertreter: Bruse, Willy Hans Heinrich

(56) Entgegenhaltungen:
- DE-A- 2 209 170
- DE-A- 2 538 686
- DE-A- 3 513 340
- DE-A- 3 730 393
- GB-A- 2 060 137

## Beschreibung

Die Erfindung betrifft eine teleskopische Lenkwelle für Kraftfahrzeuge mit Ausbildungsmerkmalen nach dem Oberbegriff des Patentanspruches 1.

Eine teleskopische Lenkwelle dieser Gattung ist sowohl aus der DE-PS 25 38 686 als auch aus der DE-AS 22 09 170 bekannt. Das Drehmoment wird danach durch drei Kugelreihen übertragen, die gleichzeitig zur Führung der beiden Wellenteile bei deren axialer Verschiebung gegeneinander wirksam sind. Die endlos umlaufenden Kugeln jeder Kugelreihe werden in einer inneren und einer äußeren, an den Enden durch kreisbogenförmige Umlenkungen miteinander verbundene Bahnen geführt, die achsparallel und in einer gemeinsamen Achsebene der Lenkwelle angeordnet sind. Die die Kugeln mit jeweils einem Teilbereich ihres Umfanges aufnehmenden inneren Längsnuten des äußeren Wellenteils und die äußeren Längsnuten des inneren Wellenteils sind jeweils als achsparallel verlaufende Rillen ausgeführt, das heißt, innen in dem äußeren Wellenteil und außen an einem inneren Wellenteil aus vollem Material spanabhebend eingearbeitet. Die innere Laufbahn der Kugeln ist bei den bekannten Anordnungen in einem Zapfen oder dergl. Körper ausgebildet, der in eine achsparallele Bohrung an der Stirnseite des inneren Wellenteils eingesetzt und befestigt ist. Um die Montage und den Einbau der Kugeln für eine spielfrei wirksame, geräuscharme und leichtgängig teleskopierbare Funktion zu ermöglichen, sind zusätzliche Leisten für die Kugelführung auf der inneren Bahn vorgesehen, die in längsverlaufende Ausnehmungen des inneren Wellenteils axial einschiebbar sind und die eigentliche Laufbahn für die Kugeln bilden. Diese in der Praxis gut bewährte Ausbildung mit in einem sehr großen Temperaturbereich kleinen Reibungsverlusten, die auch unter Einwirkung von Seitenkräften einwandfrei funktioniert, erfordert einen hohen Herstellungsaufwand und ergibt ein relativ großes Gewicht.

Bekannt sind aus der DE-OS 35 13 340 und aus der DE-OS 37 30 393 drehmomentübertragende Verbindungen für teleskopierbare Wellenteile, bei denen die Laufbahnen für drei oder mehr Kugelreihen in Blechbahnen vorgesehen und in diese durch Materialverformung eingearbeitet sind, wobei eine gewisse Vorspannung radial auf die sich in den Bahnen abwälzenden Kugeln einwirkt, um eine spielfreie Funktion zu erreichen.

Die Aufgabe der Erfindung besteht darin, eine teleskopische Lenkwelle der eingangs genannten Art ohne Verzicht auf bewährte Vorzüge im Herstellungsaufwand und im Gewicht zu reduzieren, insbesondere die Kugelumlaufführung zu vereinfachen, um diese auch leichter montieren zu können.

Die Erfindung löst diese Aufgabe durch die Ausbildungsmerkmale nach dem Patentanspruch 1.

Wesentlich ist dabei die Verwendung von Rohren für das äußere und nunmehr auch für das innere Wellenteil, wobei die Längsnuten für die Kugelführung im wesentlichen durch Materialverformung eingearbeitet, zum Beispiel im kalten Zustand eingewalzt oder eingerollt und kalibriert sind, und die Anordnung von lediglich zwei sich in einer gemeinsamen Achsebene diametral gegenüberliegenden Kugelreihen in Verbindung mit einer besonderen Gestaltung eines mehrteiligen, die Kugelführung im inneren Wellenteil bildenden Körpers. Dies führt zu einer beträchtlichen Gewichtsreduzierung, zu einer Verringerung der Herstellungskosten und zu einer Erleichterung der Montage einer teleskopischen Lenkwelle mit den Ausbildungsmerkmalen nach der Erfindung. Ein besonderes Kennzeichen der Erfindung ist darin zu sehen, daß wenigstens die eine Umlenkung für die Kugeln in einem Stift ausgebildet ist, der in eine Querbohrung des inneren Wellenteiles eingeschoben wird und dabei eine Querbohrung des Körpers, in dem die lineare innere Führung für die Kugeln angeordnet ist, durchdringt und diesen dadurch sowohl in axialer Richtung festlegt als auch gegen Verdrehung sichert.

Bevorzugte Ausbildungsmerkmale des Erfindungsgedankens enthalten die Ansprüche 2 bis 9.

Auf der Zeichnung sind zwei Ausführungsbeispiele der Erfindung dargestellt. Es zeigen:
- Figur 1: das eine Ende einer teleskopischen Lenkwelle für Kraftfahrzeuge mit umlaufend geführten Kugeln, zur Hälfte in Ansicht und zur Hälfte im Schnitt in einer Achsebene,
- Figur 2: eine gegenüber der Figur 1 um 90° versetzte Schnittdarstellung des gleichen Wellenendes,
- Figur 3: eine Ansicht entsprechend der Linie A - A der Figur 2 im Maßstab 2 : 1,
- Figur 4: einen Schnitt nach der Linie B - B der Figur 2 oder C - C der Figur 6 im Maßstab 2 : 1,
- Figur 5: eine Darstellung entsprechend Figur 1, jedoch eines abgewandelten Ausführungsbeispieles und
- Figur 6: einen Schnitt entsprechend der Figur 2 des Ausführungsbeispieles nach Figur 5.

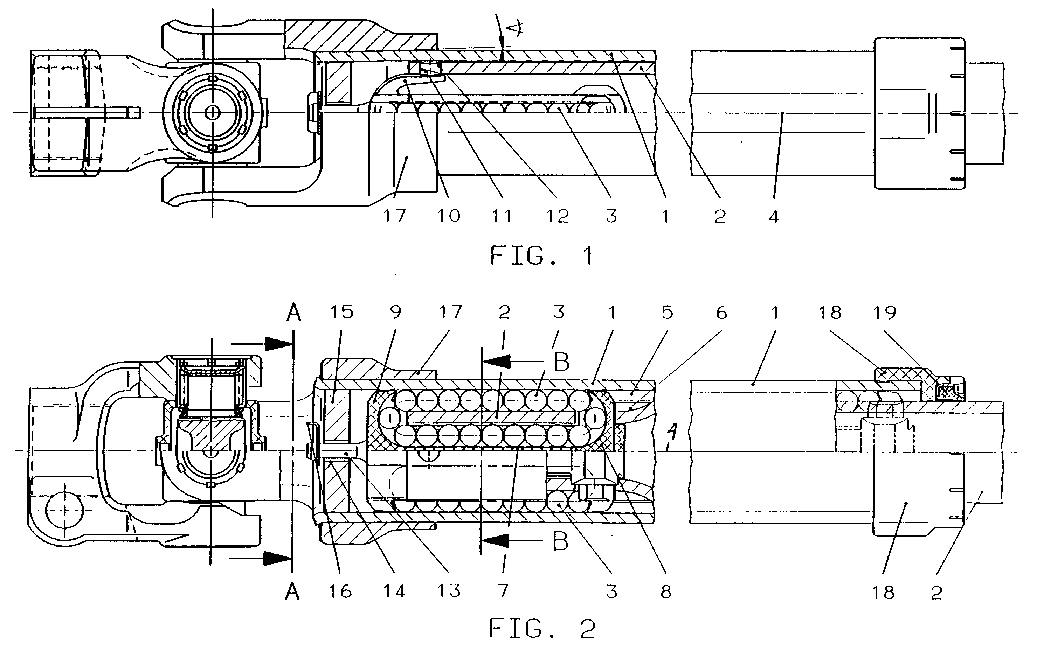

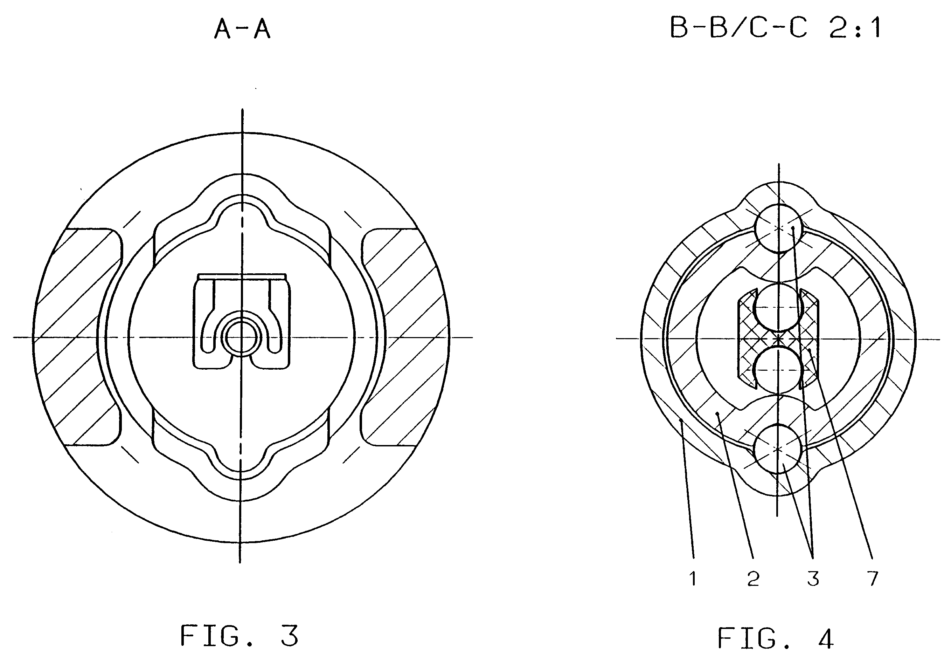

Die teleskopische Lenkwelle besteht aus einem rohrförmigen äußeren Wellenteil 1 und einem rohrförmigen inneren Wellenteil 2. Zur drehmomentübertragenden Verbindung dieser beiden Wellenteile 1 und 2 dienen Kugelführungen mit endlos umlaufenden Kugeln 3. Diese Kugeln sind in zwei Reihen angeordnet, die sich in einer gemeinsamen Ebene in der Längsachse 4 der Lenkwelle diametral gegenüberliegen, so daß sich im Querschnitt für das äußere Wellenteil 1 ein Zitronenprofil ergibt. Die in einer Reihe endlos hintereinander geführten Kugeln 3 jeder der beiden Kugelreihen greift mit einem Teilbereich ihres Umfanges in eine innere Längsnut 5 des äußeren Wellenteiles 1 bzw. in eine äußere Längsnut 6 des inneren Wellenteiles 2 ein. Die beiden inneren Längsnuten 5 des äußeren Wellenteiles 1 erstrecken sich wenigstens über die Länge des axialen Verschiebebereiches der beiden Wellenteile 1 und 2 gegenüber einander. Die beiden äußeren Längsnuten 6 des inneren Wellenteiles 2 erstrecken sich wenigstens über den Bereich der Ausdehnung der Kugelumlaufführung. Die Längsnuten sind durch Materialverformung in die rohrförmigen Wellenteile 1 und 2 eingearbeitet, zum Beispiel eingewalzt, eingerollt, kalibriert oder durch ein vergleichbares Arbeitsverfahren hergestellt. Bei der Axialverschiebung der beiden Wellenteile 1 und 2 gegeneinander wälzen sich die Kugeln in der durch die Längsnuten 5 und 6 gebildeten Führung zwischen den beiden Wellenteilen ab. Für den endlosen Umlauf der Kugeln ist innerhalb des inneren Wellenteiles eine Kugelführung vorgesehen, vorzugsweise in das Ende des inneren Wellenteiles eingesetzt. Diese Kugelführung besteht aus einer Linearführung 7 innerhalb des inneren Wellenteiles, die an beiden Enden in eine kreisbogenförmige Umlenkung 8 bzw. 9 übergeht, um die Kugeln einerseits aus der Führung in den Längsnuten 5 und 6 in die Linearführung abzuleiten und andererseits aus dieser Linearführung 7 in die Führung der Längsnuten 5 und 6 zurückzuführen. Zur Erzielung eines spielfreien und klapperfreien Kugelumlaufes können die Kugeln in ihrer Führung in den Längsnuten 5 und 6 mit einer geringen Vorspannung belastet sein und in der Linearführung 7 sowie den Umlenkungen 8 und 9 mit mehr als 180° umschlossen werden, wie es in der Figur 4 dargestellt ist. Bei dem Ausführungsbeispiel nach den Figuren 1 bis 4 sind die Linearführung 7 und die Umlenkung 9 einstückig ausgebildet, während die andere Umlenkung 8 in einem separaten Stift ausgeformt ist, der in eine Querbohrung des inneren Wellenteiles 2 eingesetzt ist und gleichfalls eine Querbohrung des Körpers mit der Linearführung 7 durchdringt, so daß dieser Körper sowohl gegen axiale Verschiebung gesichert als auch in Drehrichtung festgelegt ist. Dieses Ende der Linearführung 7 wird gleichzeitig dadurch fixiert, daß es der Innenkontur des inneren Wellenteiles 2 angepaßt ist, wie es sich aus der Figur 2 ergibt. Das andere Ende der Linearführung 7 wird durch die angeformte Umlenkung 9 fixiert, die um 90° versetzt zu der kreisbogenförmigen Kugelführung an beiden Seiten federnde Klammern 10 aufweist, die mit nasenförmigen Vorsprüngen 11 in Bohrungen 12 des inneren Wellenteiles 2 einschnappen. Bei dieser Ausbildung wird das innere Wellenteil mit den Umlenkungen 8 und 9 sowie der Linearführung 7 in dem äußeren Wellenteil vormontiert, worauf die Kugeln zugeführt werden. Es kann die Montage der Kugeln 3 aber auch außerhalb des äußeren Wellenteiles 1 erfolgen, worauf das innere Wellenteil 2 mit der Kugelumlaufführung in das äußere Wellenteil 1 eingeführt wird.

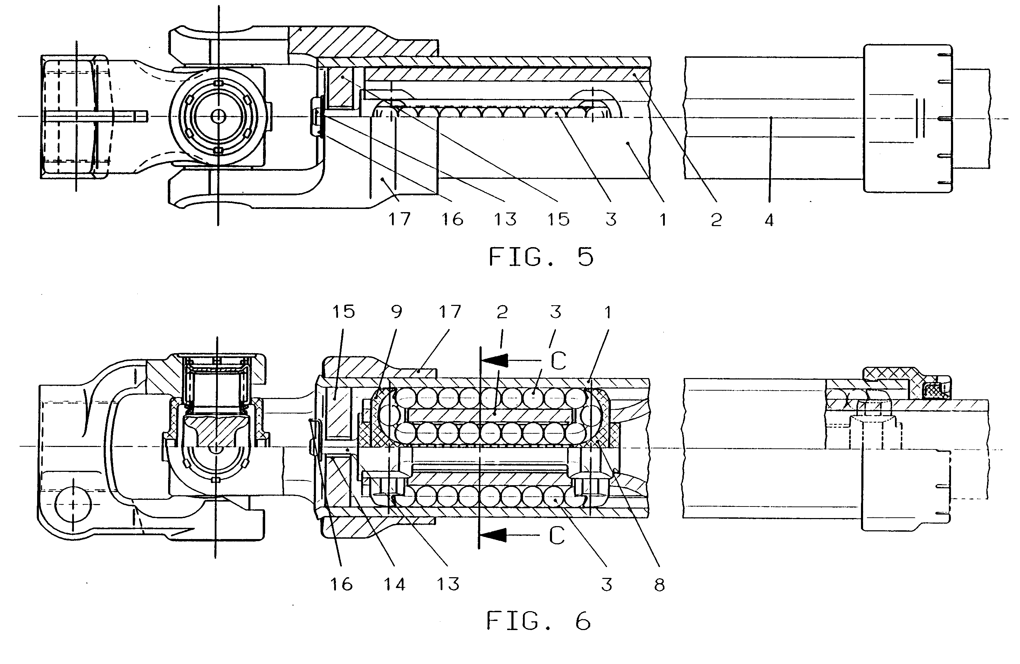

Bei dem Ausführungsbeispiel nach den Figuren 5 und 6 sind beide Umlenkungen 8 und 9 der im übrigen gleich ausgebildeten Ausführungsbeispiele in Stiften angeordnet, die Querbohrungen des Körpers mit der Linearführung 7 und in der Wandung des inneren Wellenteiles 2 durchdringen. In beiden Fällen greifen die Stifte mit den Umlenkungen 8 und 9 in die innere Längsnut 5 des äußeren Wellenteiles 1 ein, so daß dadurch eine Festlegung gegen Verdrehung um die Längsachse 4 und somit auch eine drehfeste Festlegung des Körpers mit der Linearführung 7 erfolgt. In diesem Falle kann die zu den Figuren 1 bis 4 beschriebene Ausbildung von Klammern zur Fixierung des Endes der Kugelumlaufführung entfallen.

In an sich bekannter Weise ist am äußeren Ende des die Kugelführungen 7, 8 und 9 aufweisenden Körpers ein zentraler Zapfen 13 vorgesehen, der eine Bohrung 14 einer in das Ende des äußeren Wellenteiles 1 eingesetzten Scheibe 15 durchdringt und außerhalb dieser Scheibe 15 mit einem Sicherungsblech 16, Sicherungsklammer oder dergleichen lösbar verbunden ist, so daß das innere Wellenteil 2 durch das vorgesetzten Sicherungsblech für den Transport, für Montage am Fahrzeug oder andere Zwecke gegen axiale Verschiebung im äußeren Wellenteil gesichert ist. Eine solche Ausbildung ist sowohl bei dem Ausführungsbeispiel nach den Figuren 1 bis 4 als auch bei dem Ausführungsbeispiel nach den Figuren 5 und 6 zweckmäßig.

In weiterer Ausgestaltung der Erfindung zur Erzielung einer der Aufgabenstellung entsprechenden Lösung ist eine besondere Befestigung der Gelenkgabel 17 eines Kreuzgelenkes vorgesehen. Hiernach ist das offene Ende des äußeren Wellenteiles 1 im Bereich der Befestigung der Gelenkgabel 17 geringfügig nach innen eingezogen und sitzt mit diesem konischen Bereich in einer reziprok konischen Bohrung der Gabel. Der konische Bereich des das äußere Wellenteil bildenden Rohres entsteht beim Einpressen des Rohres in die Gabel des sich anschließenden Kreuzgelenkes. Danach wird die Sicherungsscheibe 15 eingesetzt, die die beiden konischen Sitzflächen gegeneinanderpreßt.

Zusätzlich kann der Rand des äußeren Wellenteiles außerhalb der Muffe der Gelenkgabel 17 an einer oder an mehreren Stellen verstemmt oder insgesamt nach außen gebördelt sein. Dadurch wird ein in axialer Richtung besonders fester Sitz des äußeren Wellenteiles 1 in der Muffe der Gelenkgabel 17 erreicht.

Eine Kugelumlaufführung in der beschriebenen Ausbildung kann an beiden Enden zwischen einem inneren Wellenteil und einem äußeren Wellenteil vorgesehen sein. Eine solche Kugelumlaufführung eignet sich auch zur Anwendung bei mehrfachteleskopischen Lenkwellen. Die Abdichtung zwischen den teleskopisch verschiebbaren Wellenteilen ist nicht Gegenstand der Erfindung. In den Figuren 2 und 6 ist jeweils ein Überwurf 18 dargestellt, dessen eines Ende in eine partiell am Zitronenprofil ausgebildete Nut des äußeren Wellenteiles eingreift und dessen anderes Ende einen Dichtungsring 19 aufnimmt, der das innere Wellenteil dicht umschließt und auf diesem gleitend verschieblich ist.

| BEZUGSZEICHENLISTE: | | | |
|---|---|---|---|
| 1 | Wellenteil | 11 | Nase |
| 2 | Wellenteil | 12 | Bohrung |
| 3 | Kugel | 13 | Zapfen |
| 4 | Längsachse | 14 | Bohrung |
| 5 | Längsnut | 15 | Scheibe |
| 6 | Längsnut | 16 | Sicherungsblech |
| 7 | Linearführung | 17 | Gelenkgabel |
| 8 | Umlenkung | 18 | Überwurf |
| 9 | Umlenkung | 19 | Dichtungsring |
| 10 | Klammer | | |

## Patentansprüche

1. Teleskopische Lenkwelle für Kraftfahrzeuge, welche wenigstens ein äußeres Wellenteil und ein inneres Wellenteil aufweist, die beide durch umlaufend geführte Kugeln drehfest miteinander verbunden und axial gegeneinander verschieblich sind, wobei die Kugeln mit einem Teil ihres Umfanges in eine innere Längsnut des äußeren Wellenteiles, gleichzeitig mit einem anderen Teil ihres Umfanges in eine äußere Längsnut des inneren Wellenteiles eingreifen und in einer sich parallel zur Achse der Lenkwelle innerhalb des äußeren Wellenteiles erstreckenden, mit dem inneren Wellenteil verbundenen Kugelführung aus einer Linearführung und aus Kugelumlenkungen an ihren beiden Enden geführt sind, dadurch gekennzeichnet, daß sich zwei paarweise komplementäre Längsnuten (5,6) des äußeren Wellenteils (1) und des inneren Wellenteils (2) diametral zur Längsachse (4) der Lenkwelle gegenüberliegend angeordnet sind und wenigstens die eine der beiden Umlenkungen (8,9) in einem Stift ausgeformt ist, der eine Querbohrung des inneren Wellenteiles (2) durchdringt und unabhängig von der Linearführung (7) für die Kugeln (3) montierbar ist.

2. Teleskopische Lenkwelle nach Anspruch 1, dadurch gekennzeichnet, daß der die Querbohrung des inneren Wellenteiles (2) durchdringende Stift mit der ausgeformten Kugelumlenkung (8,9) auch eine Querbohrung des Körpers mit der linearen Kugelführung (7) durchdringt.

3. Teleskopische Lenkwelle nach den Ansprüchen 1 und 2, dadurch gekennzeichnet, daß die andere Umlenkung (9) ebenfalls in einem Stift ausgeformt ist, der eine Querbohrung des inneren Wellenteiles (2) und des Körpers mit der Linearführung (7) durchdringt.

4. Teleskopische Lenkwelle nach Anspruch 3, dadurch gekennzeichnet, daß die andere Umlenkung (9) sich gegen das Stirnende des inneren Wellenteiles (2) abstützt und versetzt zur Kugelumlaufbahn Federklammern (10) aufweist, die in Bohrungen (12) in der Wandung des inneren Wellenteiles eingreifen und sich bei der Montage elastisch verformen.

5. Teleskopische Lenkwelle nach einem oder mehreren der Ansprüche 1 bis 4, dadurch gekennzeichnet, daß die Linearführung (7) die Kugeln (3) innerhalb des inneren Wellenteiles (2) mit mehr als 180° und mit geringer Vorspannung umschließt.

6. Teleskopische Lenkwelle nach einem oder mehreren der Ansprüche 1 bis 5, dadurch gekennzeichnet, daß Wellenteile (1,2) aus einstückigen Rohren vorgesehen und die Längsnuten (5,6) der beiden Wellenteile (1,2) für die Kugelführung durch Materialverformung eingearbeitet sind, wobei der Rohrquerschnitt des äußeren Wellenteiles ein sogenanntes Zitronenprofil aufweist.

7. Teleskopische Lenkwelle nach einem oder mehreren der Ansprüche 1 bis 6, dadurch gekennzeichnet, daß das Ende des äußeren Wellenteiles (1) die Kugelführung im eingeschobenen Zustand überragt und in die Muffe der Gelenkgabel (17) eines Kreuzgelenkes eingespannt ist.

8. Teleskopische Lenkwelle nach Anspruch 7, dadurch gekennzeichnet, daß das offene Ende des äußeren Wellenteils (1) sich leicht konisch verjüngt und eine Scheibe (15) aufnimmt, die das offene Ende des Wellenteils gegen die Wandung einer umgekehrt konischen und im Enddurchmesser gegenüber dem äußeren Nenndurchmesser des Rohres kleineren Bohrung der Gelenkgabel (17) preßt.

9. Teleskopische Lenkwelle nach einem oder mehreren der vorhergehenden Ansprüche, dadurch gekennzeichnet, daß eine Transportsicherung aus einem am freien Ende des Körpers der Kugelführung angeordneten Zapfen (13) vorgesehen ist, der im zusammengeschobenen Zustand der Lenkwelle eine Bohrung (12) der in das offene Ende des äußeren Wellenteiles (1) eingepreßten Scheibe (15) durchdringt und auf der Außenseite mit einem Sicherungsblech (16), einer Klammer oder dergleichen verbindbar ist.

## Claims

1. Telescopic steering axle for motor vehicles which has at least one external axle part and one internal axle part, both of which are connected together so that they cannot rotate by means of balls guided so as to rotate, and which can move axially with respect to each other, the balls engaging with a part of their circumference in an internal longitudinal groove of the external axle part and at the same time with another part of their circumference in an external longitudinal groove of the internal axle part, and being guided in a ball guide comprising a linear guide and ball deflectors at its two ends, which extends parallel to the axis of the steering axle inside the external axle part and is connected to the internal axle part, characterized in that two pair-wise complementary longitudinal grooves (5, 6) of the external axle part (1) and of the internal axle part (2) are arranged diametrically opposite to the longitudinal axis (4) of the steering axle and at least one of the two deflectors (8, 9) is designed in a pin which penetrates a transverse hole of the internal axle part (2) and can be installed independently of the linear guide (7) for the balls (3).

2. Telescopic steering axle according to Claim 1, characterized in that the pin penetrating the transverse hole of the internal axle part (2) with the formed ball deflector (8, 9) also penetrates a transverse hole of the body with the linear ball guide (7).

3. Telescopic steering axle according to Claims 1 and 2, characterized in that the other deflector (9) is also formed in a pin which penetrates a transverse hole of the internal axle part (2) and of the body with the linear guide (7).

4. Telescopic steering axle according to Claim 3, characterized in that the other deflector (9) rests against the front end of the internal axle part (2) and, offset with respect to the rotary track of the balls, has spring clips (10) which engage in holes (12) in the wall of the internal axle part and deform flexibly on installation.

5. Telescopic steering axle according to one or more of Claims 1 to 4, characterized in that the linear guide (7) surrounds the balls (3) inside the internal axle part (2) by more than 180° and with slight pre-tension.

6. Telescopic steering axle according to one or more of Claims 1 to 5, characterized in that axle parts (1, 2) of one-piece tubes are provided and the longitudinal grooves (5, 6) of the two axle parts (1, 2) for the ball guide are incorporated by material deformation, the tube cross-section of the external axle part having a so-called lemon profile.

7. Telescopic steering axle according to one or more of Claims 1 to 6, characterized in that the end of the external axle part (1) projects over the ball guide in the retracted position and is clamped in the bushing of the yoke (17) of a universal joint.

8. Telescopic steering axle according to Claim 7, characterized in that the open end of the external axle part (1) tapers slightly conically and receives a disc (15) which presses the open end of the axle part against the wall of a conversely conical hole of the yoke (17) whose end diameter is smaller than that of the external nominal diameter of the tube.

9. Telescopic steering axle according to one or more of the preceding Claims, characterized in that a transport safeguard is provided in the form of a stud (13) arranged on the free end of the body of the ball guide, which, when the steering axle is in the retracted position, penetrates a hole (12) of the disc (15) pressed into the open end of the external axle part (1) and can be connected on the outside to a locking plate (16), a clip or the like.

## Revendications

1. Arbre de direction télescopique pour véhicules automobiles, comprenant au moins une partie d'arbre extérieure et une partie d'arbre intérieure reliées l'une à l'autre de façon solidaire en rotation par l'intermédiaire de billes guidées en circulation, et axialement mobiles l'une par rapport à l'autre, les billes s'engageant, sur une partie de leur circonférence, dans une rainure longitudinale intérieure de la partie d'arbre extérieure, et, en même temps, sur une autre partie de leur circonférence, dans une rainure longitudinale extérieure de la partie d'arbre intérieure, et étant guidées dans un guidage des billes s'étendant à l'intérieur de la partie extérieure de l'arbre, parallèlement à l'axe de l'arbre de direction, et relié à la partie intérieure de l'arbre, composé d'un guidage linéaire et de renvois de billes disposés aux deux extrémités du guidage,
caractérisé en ce que deux rainures longitudinales appariées complémentaires (5, 6) de la partie extérieure (1) et de la partie intérieure (2) de l'arbre sont disposées des façon diamétralement opposée l'une à l'autre, par rapport à l'axe longitudinal (4) de l'arbre de direction, et en ce que l'un au moins des deux renvois (8, 9) est réalisé sous forme d'une cheville qui traverse un alésage transversal de la partie intérieure (2) de l'arbre et qui peut être installée de façon indépendante du guidage linéaire (7) des billes (3).

2. Arbre de direction télescopique selon la revendication 1, caractérisé en ce que la cheville traversant l'alésage transversal de la partie intérieure (2) de l'arbre et comprenant le renvoi (8, 9) des billes traverse aussi un alésage transversal du corps comprenant le guidage linéaire (7) des billes.

3. Arbre de direction télescopique selon les revendications 1 et 2, caractérisé en ce que l'autre renvoi (9) est également aménagée dans une cheville, qui traverse un alésage transversal ménagé dans la partie intérieure (2) de l'arbre et dans le guidage linéaire (7) des billes.

4. Arbre de direction télescopique selon la revendication 3, caractérisé en ce que l'autre renvoi (9) s'appuie sur l'extrémité frontale de la partie intérieure (2) de l'arbre et comporte, de façon décalée par rapport au chemin de circulation des billes, des ressorts d'arrêt (10) qui s'enclenchent dans des trous (12) prévus dans la paroi de la partie intérieure de l'arbre, en se déformant élastiquement lors du montage.

5. Arbre de direction télescopique selon l'une ou plusieurs des revendications 1 à 4, caractérisé en ce que le guidage linéaire (7) entoure les billes (3), à l'intérieur de la partie intérieure (2) de l'arbre, sur plus de 180°, en exerçant une légère précontrainte.

6. Arbre de direction télescopique selon l'une ou plusieurs des revendications 1 à 5, caractérisé en ce que les parties d'arbre (1, 2) sont réalisées en tubes monobloc et en ce que les rainures longitudinales (5, 6) des deux parties d'arbre (1, 2), assurant le guidage des billes, sont réalisées par déformation de la matière, la section transversale de la partie extérieure de l'arbre présentant un profil dit de citron.

7. Arbre de direction télescopique selon l'une ou plusieurs des revendications 1 à 6, caractérisé en ce que l'extrémité de la partie extérieure (1) de l'arbre dépasse le guidage des billes, lorsqu'elle est rentrée, et est serrée dans le manchon de la fourchette d'articulation d'un joint cardan.

8. Arbre de direction télescopique selon la revendication 7, caractérisé en ce que l'extrémité ouverte de la partie extérieure (1) de l'arbre s'effile légèrement en forme de cône et reçoit une rondelle (15) qui force l'extrémité ouverte de la partie d'arbre contre la paroi d'un alésage inversement conique de la fourchette d'articulation (17), présentant un diamètre terminal inférieur au diamètre nominal extérieur du tube.

9. Arbre de direction télescopique selon l'une ou plusieurs des revendications précédentes, caractérisé en ce qu'un blocage pour le transport est prévu, qui est réalisé par un tenon (13) disposé à l'extrémité libre du corps comportant le guidage des billes, ce tenon traversant, à l'état comprimé de l'arbre de direction, un trou (12) ménagé dans la rondelle (15) emmanchée dans l'extrémité ouverte de la partie extérieure (1) de l'arbre et pouvant être relié, du côté extérieur, à une tôle d'arrêt (16), une épingle ou similaire.
